Europäisches Patentamt

European Patent Office

Office européen des brevets

(11) Veröffentlichungsnummer: **0 031 064**
**B1**

(12) **EUROPÄISCHE PATENTSCHRIFT**

(19)

(45) Veröffentlichungstag der Patentschrift:
20.07.83

(21) Anmeldenummer: 80107700.9

(22) Anmeldetag: 06.12.80

(51) Int. Cl.³: **C 01 G 23/00**, C 22 B 34/12

(54) Verfahren zur Aufarbeitung von Aufschlussrückständen bei der Titandioxidherstellung.

(30) Priorität: 21.12.79 DE 2951749

(43) Veröffentlichungstag der Anmeldung:
01.07.81 Patentblatt 81/26

(45) Bekanntmachung des Hinweises auf die Patenterteilung:
20.07.83 Patentblatt 83/29

(84) Benannte Vertragsstaaten:
DE FR GB IT

(56) Entgegenhaltungen:
DE-A-2 015 155
FR-A-1 110 531
US-A-2 344 288
US-A-3 218 131

(73) Patentinhaber: BAYER AG, Zentralbereich Patente,
Marken und Lizenzen, D-5090 Leverkusen 1, Bayerwerk
(DE)

(72) Erfinder: Panek, Peter, Dr., Bodelschwinghstrasse 12,
D-4150 Krefeld 1 (DE)
Erfinder: Woditsch, Peter, Dr., Deswatinesstrasse 83,
D-4150 Krefeld 1 (DE)
Erfinder: Kannchen, Werner, Dr., Ackerstrasse 11,
D-4100 Duisburg 46 (DE)

Verfahren zur Aufarbeitung von Aufschlussrückständen bei der Titandioxidherstellung

Die Erfindung betrifft ein Verfahren zum Aufarbeiten von Aufschlussrückständen bei der Titandioxidherstellung durch Eintragen dieser Rückstände in ein Gemisch aus feinteiliger Schlacke und Schwefelsäure, vorzugsweise Oleum.

Zum Aufschluss titanhaltiger Rohstoffe verwendet man im allgemeinen folgende Verfahren: Ein feingemahlenes titanhaltiges Material wird mit konzentrierter Schwefelsäure vermischt und danach mit einer geringen Menge Wasser oder Wasserdampf versetzt, wodurch die durch Verdünnen der konzentrierten Säure erzeugte Wärme die Umsetzung des titanhaltigen Materials und der Säure in Gang setzt. Hierbei bildet sich ein poröser Aufschlusskuchen, der in verdünnter Mineralsäure oder Wasser löslich ist.

Die titanhaltigen Materialien sind aber im günstigen Fall nur bis zu 95% aufschliessbar, es bleibt ein unlöslicher Rückstand.

Ein Verfahren zur Gewinnung von $TiO_2$ aus bei der Titandioxidherstellung ungelöst gebliebenem Ilmenitrückstand ist aus der japanischen Offenlegungsschrift Nr. 77/41197 bekannt geworden. Dabei wird der Rückstand mit 3 bis 13,5% NaCl oder Steinsalz gemischt und mit konzentrierter Schwefelsäure auf 150 bis 160° C erhitzt.

Dieses Verfahren arbeitet sehr unwirtschaftlich wegen der notwendigen Zufuhr hoher Energiemengen. Ausserdem führt das entstehende HCl-Gas zu einer korrosiven Schädigung der Anlagen.

Demgegenüber beschreibt die deutsche Patentschrift Nr. F 9827 IV a/12i ein Verfahren zum Aufschluss von Ilmenit mit Schwefelsäure in Mischung mit Rückgut, das ohne die äussere Zufuhr von Energie auskommt. Der Nachteil dieses Verfahrens liegt darin, dass ausschliesslich eine kontinuierliche Arbeitsweise die Umsetzung von Ilmeniten mit Schwefelsäure in gut kontrollierbarem Reaktionsablauf bei guter Aufschlussbeute sicherstellt.

Wie später noch gezeigt wird, ergibt die Übertragung des aus der deutschen Patentschrift Nr. F 9827 IV a/12i bekannten Verfahrens auf die häufig vorteilhaftere diskontinuierliche Arbeitsweise nur unbefriedigende Ergebnisse. Die in den Rückständen vorhandenen $TiO_2$-Gehalte sind nur wenig aufschliessbar und somit schlecht in wässerige Lösung überführbar.

Die Fr-A Nr. 1110531 beschreibt die Herstellung eines Kompositionspigmentes mit Rutilstruktur. Dies geschieht durch Auslaugen mit Salzsäure erhaltener Titanerzrückstände, vorzugsweise ausgelaugte Ilmenitrückstände, allein oder im Gemisch mit nicht vorbehandeltem Titanerz in konzentrierter Schwefelsäure. Wesentlich dabei ist, dass das Auslaugen des Titanerzes in Gegenwart von Salzsäure und bei erhöhter Temperatur stattfindet.

Die vorliegende Erfindung hat das Ziel, ein Verfahren zur Verfügung zu stellen, dass die Aufarbeitung von Rückständen lehrt, wie sie beim nass-chemischen $TiO_2$-Herstellungsverfahren nach dem Schwefelsäureaufschluss anfallen.

Überraschenderweise wurde nun gefunden, dass Aufschlussrückstände nach dem Schwefelsäureaufschluss, wie sie bei der Titandioxidherstellung anfallen, in vorteilhafter Weise einer Gewinnung der in ihnen enthaltenen $TiO_2$-Anteile zugeführt werden können, wenn diese Aufschlussrückstände gemeinsam mit feinteiligen, $TiO_2$- und Ti(III)-haltigen Schlacken in Schwefelsäure aufgeschlossen werden, wobei der Erfolg des Verfahrens in hohem Masse von der Wahl der Reaktionspartner und ihrem Verhältnis zueinander abhängt.

Die eingesetzten Aufschlussrückstände sind häufig noch mit einer so grossen Menge verdünnter Schwefelsäure behaftet, dass sich eine Zugabe eines wässerigen Lösungsmittels, wie Wasser, Wasserdampf oder verdünnte Schwefelsäure, zum Starten der Reaktion erübrigt, wie es in der US-A Nr. 2344288 beschrieben ist.

Allgemein ist das erfindungsgemässe Verfahren zur Aufarbeitung von Aufschlussrückständen der Titandioxidherstellung nach dem Schwefelsäureaufschluss zur Gewinnung des darin enthaltenen $TiO_2$-Anteils durch gemeinsamen Aufschluss mit Schlacke in Schwefelsäure und Lösen der erhaltenen Reaktionsmasse in einem wässerigen Lösungsmittel, wie Wasser oder verdünnter Schwefelsäure, wobei gegebenenfalls die Aufschlussreaktion durch Zugabe von Wasser, Wasserdampf oder verdünnter Schwefelsäure gestartet wird, dadurch gekennzeichnet, dass 5 bis 95%, vorzugsweise 30 bis 75%, eines titanhaltigen Aufschlussrückstandes gemeinsam mit 95 bis 5%, vorzugsweise 70 bis 25%, feinteiliger Schlacke, die einen Ti-Gehalt > 60%, vorzugsweise > 80%, berechnet als $TiO_2$ und einen Ti(III)-Gehalt von 5 bis 40%, vorzugsweise von 20 bis 35%, berechnet als $TiO_2$ und bezogen auf Schlacke, aufweist, in Schwefelsäure eines $H_2SO_4$-Gehaltes > 86% aufgeschlossen wird.

Eine bevorzugte Form des erfindungsgemässen Verfahrens ist weiterhin dadurch gekennzeichnet, dass der titanhaltige Aufschlussrückstand in einer solchen Menge in eine Vorlage der feinteiligen Schlacke und Schwefelsäure eines $H_2SO_4$-Gehaltes > 86% eingetragen wird, dass das Verhältnis von $H_2SO_4$ zu $TiO_2$ 1,5:1 bis 3:1, vorzugsweise 1,7:1 bis 2,2:1, und die $H_2SO_4$-Konzentration nach Zugabe aller Komponenten 80 bis 98%, vorzugsweise 85 bis 98%, beträgt.

In seiner besonders bevorzugten Form ist das erfindungsgemässe Verfahren schliesslich dadurch gekennzeichnet, dass als Schwefelsäure Oleum mit einem $SO_3$-Gehalt bis zu 30% eingesetzt wird.

Die nach dem erfindungsgemässen Verfahren verarbeiteten titanhaltigen Aufschlussrückstände sind dadurch gekennzeichnet, dass sie sowohl aus Ilmenit- als auch aus Schlackeaufschlüssen sowie aus Ilmenit/Schlacke-Mischaufschlüssen stammen können, wobei sie beispielsweise als Dorrunterlauf nach einer anschliessenden Grobfiltration über ein mit Filtrierhilfsmitteln belegtes Drehfilter und Waschen erhalten werden und die Filtrierhilfsmittel enthalten können. Eine weitere Vorbehandlung der Aufschlussrückstände ist nicht vorgesehen.

Das erfindungsgemässe Verfahren erzielt in einfacher Weise hohe Aufschlussausbeuten an $TiO_2$ sowohl aus der eingesetzten Schlacke als auch aus den eingesetzten Aufschlussrückständen. Es verlangt nur einen Schwefelsäureverbrauch, wie er auch beim Schwefelsäureaufschluss von Erzen üblich ist, und ergibt damit nach Lösen der Reaktionsmasse in einem wässerigen Lösungsmittel, wie Wasser oder einer verdünnten Schwefelsäure, und nach Klärung unmittelbar zum Einsatz in die Hydrolyse geeignete Titanylsulfatlösungen. Schliesslich gestattet es die Durchführung der Aufschlussreaktion sowohl in kontinuierlicher wie auch in diskontinuierlicher Arbeitsweise und erfordert in der besonders bevorzugten Form bei Mitverarbeitung von Oleum und bei den angegebenen Mischungsverhältnissen der Reaktionspartner keine Energiezufuhr von aussen und ist damit sehr wirtschaftlich.

Nachfolgend wird das erfindungsgemässe Verfahren beispielhaft erläutert. Sofern nichts anderes angegeben wird, werden alle Angaben in Gewichtsprozent gemacht.

*Beispiel 1*

In einem nach aussen gut isolierten Glasgefäss, das mit einem Innenthermometer und einem Rührer versehen war und das sich zum Ausgleich von Wärmeverlusten in einem der Innentemperatur des Aufschlussgefässes nachführbaren Heissluftbad befand, wurden die in der Tabelle 1 angegebenen Mengen einer feinteiligen Schlacke (70,8% Ti; 7,9% Ti(III), berechnet als $TiO_2$ und bezogen auf Schlacke; 9,9% Fe) und Oleum (106,1% $H_2SO_4$) vorgelegt. In diese Vorlage wurden dann unter intensivem Rühren die ebenfalls in der Tabelle 1 angegebenen Mengen eines filtrierhilfsmittelhaltigen Ilmenitaufschlussrückstandes (39,5% $TiO_2$; 5,2% Fe, 8,6% $H_2SO_4$; 44,0% Glühverlust einschliesslich des getrennt ausgewiesenen $H_2SO_4$-Gehaltes; bis zu 10% $SiO_2$-Filterhilferückstand) in einer solchen Menge eingetragen, dass der Gesamt-$TiO_2$-Gehalt 100 g entsprach, und dass das Verhältnis von $H_2SO_4$ zu $TiO_2$ 2,0:1 und die $H_2SO_4$-Endkonzentration 88,7 bis 96,5% betrug. Dabei stieg die Temperatur in dem Aufschlussgefäss auf Werte zwischen 114 bis 159° C an und erreichte in exothermer Aufschlussreaktion nach 14 bis 28 min schliesslich die maximalen Reaktionstemperaturen von 198 bis 216° C. Die verfestigten Reaktionsmassen wurden sodann 6 h bei ca. 190° C gehalten und durch Zugabe von 350 ml Wasser bei 70° C gelöst. Die gesamte $TiO_2$-Ausbeute der Aufschlüsse ($TiO_2$ gelöst im Verhältnis zu $TiO_2$ ungelöst) betrug 87 bis 91,5%. Da die $TiO_2$-Ausbeute der verwendeten Schlacke unter gleichen Bedingungen bei 95% liegt, beträgt die $TiO_2$-Ausbeute des eingesetzten Ilmenitaufschlussrückstandes nach diesem Verfahren 71,4 bis 86,4%.

Tabelle 1: Verarbeitung eines Ilmenitaufschlussrückstandes mit Schlacke und Oleum

| | | | | | | |
|---|---|---|---|---|---|---|
| Schlacke (g) | 108,6 | 103,0 | 97,0 | 90,7 | 84,0 | 76,9 |
| Schlacke (%) | 65 | 60 | 55 | 50 | 45 | 40 |
| Ilmenitrückstand (g) | 58,5 | 68,6 | 79,3 | 90,7 | 102,6 | 115,3 |
| Ilmenitrückstand (%) | 35 | 40 | 45 | 50 | 55 | 60 |
| Oleum | 206,7 | 205,8 | 204,8 | 203,8 | 202,9 | 201,7 |
| $H_2SO_4$-Endkonzentration (%) | 96,5 | 95,0 | 93,5 | 92,0 | 90,4 | 88,7 |
| Mischungstemperatur (°C) | 114 | 124 | 124 | 152 | 151 | 159 |
| Max. Reaktionstemperatur (°C) | 216 | 211 | 203 | 204 | 199 | 198 |
| Zeit bis max. Reaktionstemperatur ab Mischungsende (min) | 21 | 24 | 28 | 18 | 17 | 14 |
| $TiO_2$-Ausbeute (%) (Gesamt) | 89,4 | 91,3 | 90,1 | 89,8 | 91,5 | 87,0 |
| $TiO_2$-Ausbeute (%) (Rückstand, bei $TiO_2$-Ausbeute der Schlacke = 95%) | 71,4 | 81,2 | 79,6 | 80,4 | 86,4 | 77,6 |

*Vergleichsbeispiel*

Zum Vergleich wurden nicht dem erfindungsgemässen Verfahren entsprechend in der schon in Beispiel 1 verwendeten Aufschlussapparatur die in der Tabelle 2 angegebenen Mengen eines feinteiligen Ilmenits (60,2% $TiO_2$; 25,0% Fe; Fe(III) zu Fe(II)=2,29:1) und Oleum (106,1% $H_2SO_4$) vorgelegt. In diese Vorlage wurden dann unter intensivem Rühren die ebenfalls in der Tabelle 2 angegebenen Mengen des wie in Beispiel 1 verwendeten filterhilfehaltigen Ilmenitaufschlussrückstandes (39,5% $TiO_2$; 5,2% Fe; 8,6% $H_2SO_4$; 44,0% Glühverlust einschliesslich des getrennt

ausgewiesenen $H_2SO_4$-Gehaltes; ca. 10% $SiO_2$) in einer solchen Menge eingetragen, dass der Gesamt-$TiO_2$-Gehalt 100 g entsprach, das Verhältnis von $H_2SO_4$ zu $TiO_2$ 2,0:1 und die $H_2SO_4$-Endkonzentration 88,9 bis 96,7% betrug. Dabei stieg die Temperatur in dem Aufschlussgefäss auf Werte zwischen 130 und 194° C an und erreichte in exothermer Aufschlussreaktion nach 3 bis 6 min schliesslich die maximalen Reaktionstemperaturen von 196 bis 220° C.

Die verfestigten Reaktionsmassen wurden sodann 3 h bei 180° C gehalten und durch Zugabe von 350 ml Wasser bei 70° C gelöst. Die Gesamt-$TiO_2$-Ausbeute der Aufschlüsse ($TiO_2$ gelöst im

Verhältnis zu $TiO_2$ ungelöst) betrug 74 bis 84,3%. Da die $TiO_2$-Ausbeute des verwendeten Ilmenits unter gleichen Bedingungen bei 93% liegt, beträgt die $TiO_2$-Ausbeute des eingesetzten Ilmenitaufschlussrückstandes nach diesem Verfahren 28,5 bis 73,4%. Sie liegt damit deutlich niedriger, als sie nach dem erfindungsgemässen Verfahren des Beispiels 1 erhalten wurde.

Tabelle 2: Verarbeitung eines Ilmenitaufschlussrückstandes mit Ilmenit und Oleum

| | | | | | | |
|---|---|---|---|---|---|---|
| Ilmenit (g) | 122,7 | 115,6 | 108,1 | 100,3 | 92,2 | 83,7 |
| Ilmenit (%) | 65 | 60 | 55 | 50 | 45 | 40 |
| Ilmenitrückstand (g) | 66,2 | 77,0 | 88,4 | 100,3 | 112,7 | 125,6 |
| Ilmenitrückstand (%) | 35 | 40 | 45 | 50 | 55 | 60 |
| Oleum (g) | 239,6 | 236,8 | 233,7 | 230,6 | 277,2 | 223,9 |
| $H_2SO_4$-Endkonzentration (%) | 96,7 | 95,2 | 93,7 | 92,2 | 90,6 | 88,9 |
| Mischungstemperatur (°C) | 130 | 139 | 163 | 178 | 192 | 194 |
| Max. Reaktionstemperatur | 220 | 214 | 204 | 199 | 196 | 199 |
| Zeit bis max. Reaktionstemperatur ab Mischungsende (min) | 6 | 4 | 4 | 4 | 4 | 3 |
| $TiO_2$-Ausbeute (%) (Gesamt) | 81,2 | 74,0 | 77,9 | 81,9 | 84,3 | 79,1 |
| $TiO_2$-Ausbeute (%) (Rückstand, bei $TiO_2$-Ausbeute des Ilmenits = 93%) | 28,5 | 30,5 | 49,8 | 54,3 | 73,4 | 65,0 |

*Beispiel 2*

Erfindungsgemäss wurden in der schon in Beispiel 1 verwendeten Aufschlussapparatur die in der Tabelle 3 angegebenen Mengen einer feinteiligen Schlacke (85,1% Ti; 30,2% Ti(III), berechnet als $TiO_2$ und bezogen auf Schlacke; 9,5% Fe) und Oleum (106,1% $H_2SO_4$) vorgelegt. In diese Vorlage wurden dann unter intensivem Rühren die ebenfalls in der Tabelle 3 angegebenen Mengen des wie in Beispiel 1 verwendeten filterhilfehaltigen Ilmenitaufschlussrückstandes (39,5% $TiO_2$; 5,2% Fe, 8,6% $H_2SO_4$; 44,0% Glühverlust einschliesslich des getrennt ausgewiesenen $H_2SO_4$-Gehaltes; ca. 10% $SiO_2$) in einer solchen Menge eingetragen, dass der Gesamt-$TiO_2$-Gehalt 100 g entsprach, das Verhältnis von $H_2SO_4$ zu $TiO_2$

2,0:1 und die $H_2SO_4$-Endkonzentration 87,7 bis 96,1% betrug.

Dabei stieg die Temperatur in dem Aufschlussgefäss auf Werte zwischen 110 und 155°C und erreichte in exothermer Aufschlussreaktion nach 11 bis 20 min schliesslich die maximalen Reaktionstemperaturen von 185 bis 215°C. Die verfestigten Reaktionsmassen wurden sodann 6 h bei 190°C gehalten und durch Zugabe von 350 ml Wasser bei 70°C gelöst. Die Gesamt-$TiO_2$-Ausbeute der Aufschlüsse ($TiO_2$ gelöst im Verhältnis zu $TiO_2$ ungelöst) betrug 91,5 bis 94,5%. Da die $TiO_2$-Ausbeute der verwendeten Schlacke unter gleichen Bedingungen bei 97% liegt, beträgt die $TiO_2$-Ausbeute des eingesetzten Ilmenitaufschlussrückstandes nach diesem Verfahren 84,8 bis 88,0%.

Tabelle 3: Verarbeitung eines Ilmenitaufschlussrückstandes mit Schlacke und Oleum

| | | | | | | |
|---|---|---|---|---|---|---|
| Schlacke (g) | 89,7 | 85,2 | 80,3 | 75,0 | 69,3 | 60,9 |
| Schlacke (%) | 60 | 55 | 50 | 45 | 40 | 35 |
| Ilmenitrückstand (g) | 59,8 | 69,7 | 80,3 | 91,6 | 103,9 | 121,9 |
| Ilmenitrückstand (%) | 40 | 45 | 50 | 55 | 60 | 65 |
| Oleum (g) | 202,0 | 202,2 | 201,5 | 200,8 | 199,6 | 198,7 |
| $H_2SO_4$-Endkonzentration (%) | 96,1 | 94,7 | 93,2 | 91,6 | 90,0 | 87,7 |
| Mischungstemperatur (°C) | 110 | 121 | 145 | 148 | 152 | 155 |
| Max. Reaktionstemperatur (°C) | 221 | 214 | 201 | 204 | 198 | 191 |
| Zeit bis max. Reaktionstemperatur ab Mischungsende (min) | 18 | 20 | 20 | 13 | 11 | 13 |
| $TiO_2$-Ausbeute (%) (Gesamt) | 94,1 | 94,5 | 94,1 | 93,4 | 92,1 | 91,5 |
| $TiO_2$-Ausbeute (%) (Rückstand, bei $TiO_2$-Ausbeute der Schlacke = 97%) | 84,8 | 88,0 | 87,7 | 87,0 | 85,1 | 85,5 |

**Patentansprüche**

1. Verfahren zur Aufarbeitung von Aufschlussrückständen der Titandioxidherstellung nach dem Schwefelsäureaufschluss zur Gewinnung des darin enthaltenen $TiO_2$-Anteils durch gemeinsamen Aufschluss mit Schlacke in Schwefelsäure und Lösen der erhaltenen Reaktionsmasse in einem wässerigen Lösungsmittel, wie Wasser oder verdünnter Schwefelsäure, wobei gegebenenfalls die Aufschlussreaktion durch Zugabe von Wasser, Wasserdampf oder verdünnter Schwefelsäure gestartet wird, dadurch gekennzeichnet, dass 5 bis 95%, vorzugsweise 30 bis 75%, eines titanhaltigen Aufschlussrückstandes gemeinsam mit 95 bis 5%, vorzugsweise 70 bis 25%, feinteiliger Schlacke, die einen Ti-Gehalt >60%, vorzugsweise >80%, berechnet als $TiO_2$ und einen Ti(III)-Gehalt von 5 bis 40%, vorzugsweise von 20 bis 35%, berechnet als $TiO_2$ und bezogen auf Schlacke, aufweist, in

Schwefelsäure eines $H_2SO_4$-Gehaltes $>86\%$ aufgeschlossen wird.

2. Verfahren gemäss Anspruch 1, dadurch gekennzeichnet, dass der titanhaltige Aufschlussrückstand in einer solchen Menge in eine Vorlage der feinteiligen Schlacke und Schwefelsäure eingetragen wird, dass das Verhältnis von $H_2SO_4$ zu $TiO_2$ 1,5:1 bis 3:1, vorzugsweise 1,7:1 bis 2,2:1 und die $H_2SO_4$-Konzentration nach Zugabe aller Komponenten 80 bis 98%, vorzugsweise 85 bis 98%, beträgt.

3. Verfahren gemäss einem ber beiden Ansprüche 1 oder 2, dadurch gekennzeichnet, dass als Schwefelsäure Oleum mit einem $SO_3$-Gehalt bis zu 30% eingesetzt wird.

## Claims

1. A process for working up hydrolysis residues in the production of titanium dioxide according to sulphuric acid hydrolysis to obtain the quantity of $TiO_2$ contained therein by joint hydrolysis with slag in sulphuric acid and by dissolving the resulting reaction mass in an aqueous solvent, such as water or dilute sulphuric acid, the hydrolysis reaction optionally being initiated by adding water, water vapour or dilute sulphuric acid, characterized in that from 5 to 95%, preferably from 30 to 75%, of a titanium-containing hydrolysis residue is hydrolysed together with from 95 to 5%, preferably from 70 to 25%, of finely-divided slag which has a Ti content of $>60\%$, preferably $>80\%$, expressed as $TiO_2$, and has a Ti(III) content of from 5 to 40%, preferably from 20 to 35%, expressed as $TiO_2$ and based on slag, in sulphuric acid of an $H_2SO_4$ content of more than 86%.

2. A process according to claim 1, characterized in that the titanium-containing hydrolysis residue is introduced into a receiving solution of the finely-divided slag and sulphuric acid in a quantity such that the ratio of $H_2SO_4$ to $TiO_2$ is from 1.5:1 to 3:1, preferably from 1.7:1 to 2.2:1, and the $H_2SO_4$ concentration after adding all the components is from 80 to 98%, preferably from 85 to 98%.

3. A process according to one of claims 1 or 2, characterized in that fuming sulphuric acid having an $SO_3$ content of up to 30% is used as sulphuric acid.

## Revendications

1. Procédé de traitement de résidus d'attaque dans la production de dioxyde de titane par attaque sulfurique pour l'obtention de la quantité de $TiO_2$ qui y est contenue, par attaque commune avec un laitier dans l'acide sulfurique et dissolution de la masse réactionnelle obtenue dans un solvant aqueux tel que l'eau ou l'acide sulfurique dilué, la réaction d'attaque étant alors amorcée, le cas échéant, par addition d'eau, de vapeur d'eau ou d'acide sulfurique dilué, caractérisé en ce qu'on attaque 5 à 95%, de préférence 30 à 75%, d'un résidu d'attaque contenant du titane en commun avec 95 à 5%, de préférence 70 à 25%, d'un laitier finement divisé qui présente une teneur en Ti de plus de 60%, de préférence de plus de 80%, exprimée en $TiO_2$, et une teneur en Ti(III) de 5 à 40%, de préférence de 20 à 35%, exprimée en $TiO_2$ et par rapport au laitier, dans de l'acide sulfurique ayant une teneur en $H_2SO_4$ de plus de 86%.

2. Procédé suivant la revendication 1, caractérisé en ce que le résidu d'attaque contenant du titane est chargé dans un mélange préalable du laitier finement divisé et d'acide sulfurique en une quantité telle que le rapport de $H_2SO_4$ à $TiO_2$ ait une valeur de 1,5:1 à 3:1, de préférence de 1,7:1 à 2,2:1 et que la concentration en $H_2SO_4$, après l'addition de tous les composants, s'élève à 80-98%, de préférence à 85-98%.

3. Procédé suivant l'une des revendications 1 ou 2, caractérisé en ce qu'on utilise comme acide sulfurique un oléum dont la teneur en $SO_3$ va jusqu'à 30%.